(19) Europäisches Patentamt / European Patent Office / Office européen des brevets

(11) **EP 2 528 788 B1**

(12) **FASCICULE DE BREVET EUROPEEN**

(45) Date de publication et mention
de la délivrance du brevet:
**03.05.2017 Bulletin 2017/18**

(21) Numéro de dépôt: **11704662.3**

(22) Date de dépôt: **20.01.2011**

(51) Int Cl.:
**B60T 8/1755** *(2006.01)*

(86) Numéro de dépôt international:
**PCT/FR2011/050104**

(87) Numéro de publication internationale:
**WO 2011/092415 (04.08.2011 Gazette 2011/31)**

(54) **SYSTEME ET PROCEDE DE SUIVI DE LA TRAJECTOIRE D'UN VEHICULE**

SYSTEM UND VERFAHREN ZUR VERFOLGUNG DES WEGS EINES FAHRZEUGS

SYSTEM AND METHOD FOR TRACKING THE PATH OF A VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.01.2010 FR 1050627**

(43) Date de publication de la demande:
**05.12.2012 Bulletin 2012/49**

(73) Titulaire: **Renault s.a.s.**
**92100 Boulogne Billancourt (FR)**

(72) Inventeurs:
• **AUVINET, Jannick**
**F-27000 Evreux (FR)**
• **BOUET, Christophe**
**F-14150 Ouistreham (FR)**
• **GRUYELLE, Bertrand**
**F-78540 Vernouillet (FR)**
• **PHILIPPE, Thierry**
**27950 SAINT MARCEL (FR)**

(56) Documents cités:
EP-A2- 0 392 164    DE-A1- 4 111 614
DE-A1- 19 620 584    DE-A1- 19 816 432
US-A- 6 003 959

**Description**

L'invention concerne le domaine du suivi de trajectoires d'un véhicule automobile, et plus particulièrement des systèmes et procédés de maintien et de correction de la trajectoire lorsqu'un véhicule sous-vire.

L'invention s'applique au suivi de trajectoire du véhicule automobile lorsqu'il se trouve dans un virage et qu'il y a une demande de couple moteur de la part de l'utilisateur.

Lors d'un virage s'il y a une demande de couple sur le train avant, un véhicule à traction avant à tendance à sous-virer, c'est-à-dire que son rayon de braquage est supérieur à la courbe définie par la route. Dans le cas d'un véhicule à propulsion, le véhicule à tendance à survirer.

Il est connu de contrôler la trajectoire d'un véhicule automobile en surveillant certaines grandeurs physiques telles que la vitesse de lacet, l'accélération transversale, la dérive du véhicule. Ces grandeurs véhicules sont mesurées par des capteurs gyroscopiques et/ou accélérométriques. Les valeurs mesurées sont comparées à des modèles véhicules qui traduisent la volonté du conducteur. En fonction de la comparaison, le système détermine une consigne en vue de réduire cet écart. La consigne est appliquée sur les éléments pouvant générer une variation de la traînée sur une ou plusieurs roues, tels que les freins, des différentiels pilotés ou des moteurs électriques indépendants montés sur chacune des roues.

Ainsi la demande de brevet FR2893294, décrit un procédé de stabilisation d'un véhicule automobile. Ce procédé comprend une étape de calcul d'un indicateur de sous virage, le calcul est basé sur le rapport du lacet de consigne sur le lacet mesuré du véhicule. Le lacet de consigne est selon la géométrie du véhicule, l'angle de braquage et la vitesse du véhicule.

La demande de brevet FR2845656, décrit un procédé pour réduire l'écart de trajectoire d'un véhicule automobile. Ce procédé comprend une étape d'évaluation de l'erreur à partir de l'acquisition d'un capteur d'angle volant, d'un accéléromètre mesurant l'accélération latérale, des capteurs de vitesses de chacune des roues et d'un capteur de rotation propre permettant d'évaluer l'angle de lacet. Il est écrit, dans le document, que le procédé est très lourd en termes de calcul, et qu'il est judicieux de prévoir soit un calculateur puissant, soit calculateur dédié uniquement à cette tâche.

Le document DE 41 11 614 décrit un procédé de détection d'une instabilité d'un véhicule dans lequel on calcule les vitesses de lacet des trains avant et arrière et on conclut à l'existence d'une instabilité si cette différence dépasse un seuil.

Les inconvénients des documentes présentés sont le temps nécessaire pour déterminer l'écart de trajectoire et la difficulté de mise au point car elle dépend de paramètres propres au véhicule à un instant donnée (pneumatiques, charge, position du centre de gravité). Ces inconvénients impliquent une marge d'erreur qui oblige à faire agir les systèmes qui réduisent l'écart de trajectoire de manière très violente. Un inconvénient ressort à la lecture de ces documents est la lourdeur des calculs et la gestion de la mémoire du ou des calculateurs dédiés, du fait principalement de la gestion des modèles.

Au vu de ce qui précède, un objectif de l'invention est de pouvoir détecter rapidement un écart de trajectoire sous accélération et par conséquent de pouvoir corriger l'écart rapidement afin de perturber le moins possible le conducteur.

Un autre objectif est de permettre d'appliquer une consigne en suivant précisément la volonté du conducteur.

Pour y parvenir il est proposé un système de suivi de la trajectoire d'un véhicule automobile comportant un capteur de vitesse instantanée sur chacune des roues des trains avant et arrière. Ce système comporte des moyens de calcul de l'écart de vitesse entre roues d'un même train, des moyens de calcul de la différence entre les écarts de vitesses de chacun des trains, et des moyens de comparaison de cette différence avec une valeur seuil mémorisée, le système étant caractérisé en ce qu'ilb comporte des moyens de détermination d'un écart de trajectoire du véhicule en fonction de l'écart de vitesse des roues du train arrière ou en fonction du signe de la mesure de l'angle du volant de direction du véhicule par des moyens de mesure dudit angle, des moyens de mesure du couple moteur, des moyens de détermination d'une consigne de correction de vitesse de roue et des moyens d'application de la consigne de correction de vitesse de roue, lesdits moyens étant capable d'appliquer la consigne de vitesse de roue lorsque la valeur mesurée de l'angle du volant de direction du véhicule et du couple dépassent une valeur..

Grâce à cela, il est possible de détecter rapidement un écart de la trajectoire du véhicule, tout en présentant l'avantage d'adapter la consigne à la trajectoire et à la puissance voulut par le conducteur.

Le système peut comporter des moyens d'applications de la consigne de correction capables d'appliquer la consigne de correction sur la roue avant intérieure de la trajectoire.

Selon un autre aspect, il est proposé également un procédé de suivie de la trajectoire d'un véhicule comprenant les étapes :

- calcul des écarts de vitesse des roues de chacun des trains avant et arrière,

- calcul de la différence des écarts de vitesse entre chacun des trains avant et arrière,

- comparaison de la différence des écarts de vitesse avec une valeur seuil mémorisée,

- détermination d'un écart de la trajectoire du véhicule en fonction de l'écart de vitesse des roues du train arrière ou en fonction du signe de la mesure de l'angle du volant de direction du véhicule,

- mesure du couple moteur,

- détermination de la consigne de vitesse de roue à appliquer en fonction d'une mesure de l'angle du volant de direction du véhicule et du couple moteur,

- correction de vitesse de roue lorsque la valeur mesurée de l'angle du volant de direction du véhicule et du couple moteur dépassent une valeur.

Selon une variante, le procédé peut comporter une étape d'application de la consigne de correction sur la roue avant intérieure de la trajectoire.

D'autres caractéristiques et avantages de l'invention apparaîtront à la lecture de la description détaillée qui suit, d'un exemple non limitatif. Pour sa compréhension, on se reportera aux figures suivantes :

- la figure 1 est une représentation schématique d'un véhicule selon l'invention ;
- la figure 2 est une représentation schématique d'un véhicule qui sous-vire dans une courbe à gauche ;
- la figure 3 est une représentation schématique des principales étapes d'un procédé détection et de correction d'un écart de trajectoire dans une courbe à gauche ;
- la figure 4 est une représentation schématique d'un système de suivi de trajectoire ;
- la figure 5 est une représentation schématique d'un système de suivi de trajectoire lors de la correction d'un écart de trajectoire d'un véhicule, dans une courbe à gauche.

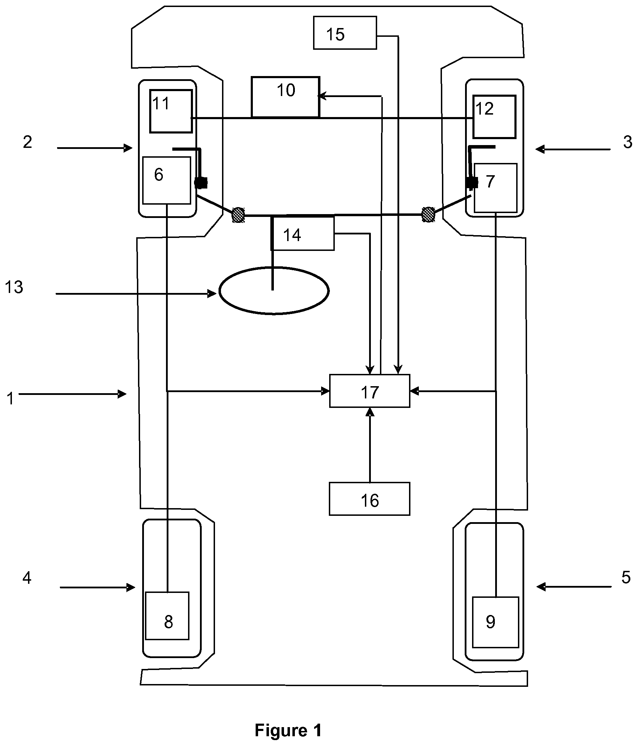

En référence à la figure 1, un véhicule 1 automobile, à traction entrainé par un moteur (non représenté sur les figures), comporte quatre roues 2 à 5 (roue avant gauche 2, roue avant droite 3, roue arrière gauche 4 et roue arrière droite 5). Chaque roue 2 à 5 est équipée respectivement d'un capteur de vitesse instantanée 6 à 9 permettant de mesurer les vitesses $\omega_{avg}$, $\omega_{avd}$, $\omega_{arg}$ et $\omega_{ard}$ des roues 2 à 5.

Un dispositif de freinage 10 capable de générer une pression de freinage différente dans les étriers de freins avant gauche 11 et droit 12, ce dispositif de freinage 10 peut, par exemple, être un dispositif type actionneur ESC (Electronic Stability Control). De plus, le dispositif ESC présent l'avantage de comprendre des capteurs de vitesses instantanées sur les roues.

Le véhicule 1 comporte un volant de direction 13 agissant sur une commande de direction qui permet d'orienter les roues avant 2 et 3. Le volant de direction 13 est équipé d'un capteur 14 de l'angle du volant de direction 13, permettant de mesurer l'angle $\alpha$ du volant de direction 13.

Le véhicule 1 comporte, également, un capteur du couple 15 moteur permettant de mesurer le couple moteur $M$ et un capteur de vitesse 16 du véhicule 1 mesurant la vitesse $v$ du véhicule 1.

Le véhicule 1 est équipé d'un calculateur 17 permettant de contrôler et de commander différents dispositifs. Le calculateur 17 peut recevoir par des connexions des informations, par exemple, en provenance des capteurs de vitesse 6 à 9, du capteur de couple 15 moteur et du capteur de l'angle 14 du volant de direction 13. Le calculateur 17 peut, aussi, commander le dispositif de freinage 10. Le calculateur 17 permet, en outre, d'exécuter le procédé de commande de la trajectoire du véhicule 1.

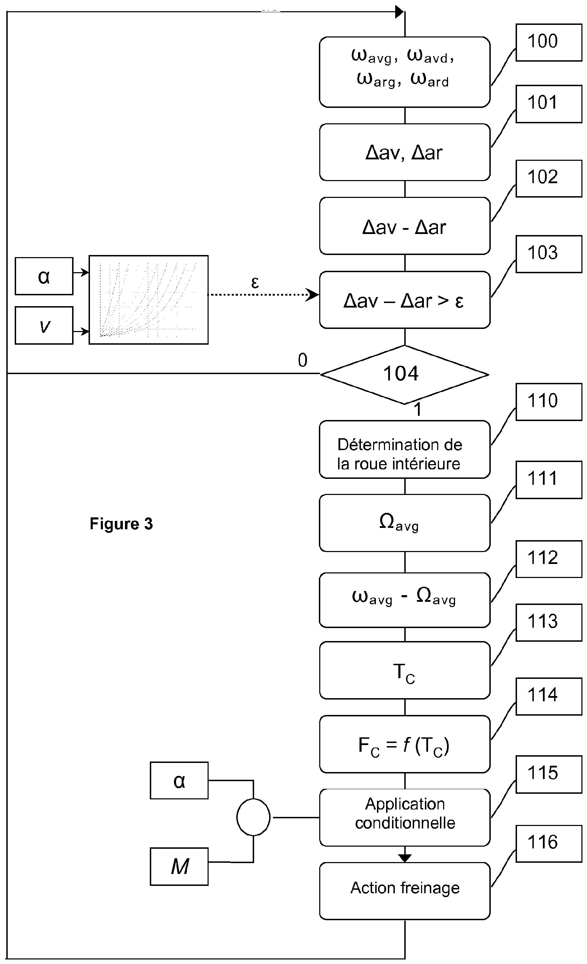

Comme représenté à la figure 3, le procédé comprend une étape 100 d'acquisition des signaux des capteurs de vitesses 6 à 9 indexés $\omega_{avg}$, $\omega_{avd}$, $\omega_{arg}$ et $\omega_{ard}$. Le procédé comprend, également, une étape 101 de calcul des écarts de vitesse des roues des trains avant $\Delta av$ et arrières $\Delta ar$. En d'autres termes, l'étape 101 permet de calculer l'écart des vitesses selon les équations (1) et (2) suivantes :

$$\text{train avant } \Delta av = (\omega_{avd} - \omega_{avg}) \qquad (1)$$

$$\text{et train arrière } \Delta ar = (\omega_{ard} - \omega_{arg}) \qquad (2)$$

3

Puis une étape 102 permet de calculer la différence de l'écart de vitesse des roues du train avant Δav avec l'écart de vitesse des roues du train arrière Δar, selon l'équation (3) suivante :

$$(\omega_{avd} - \omega_{avg}) - (\omega_{ard} - \omega_{arg}) \qquad (3)$$

L'étape suivante 103 permet de comparer le résultat du calcul de l'étape 102 avec une valeur seuil mémorisée $\varepsilon$. La valeur seuil $\varepsilon$ peut être déterminée, selon l'exemple illustré, pour une cartographie de l'angle $\alpha$ du volant de direction 13 du véhicule 1 et de couple 15 moteur (en pointillé sur la figure).

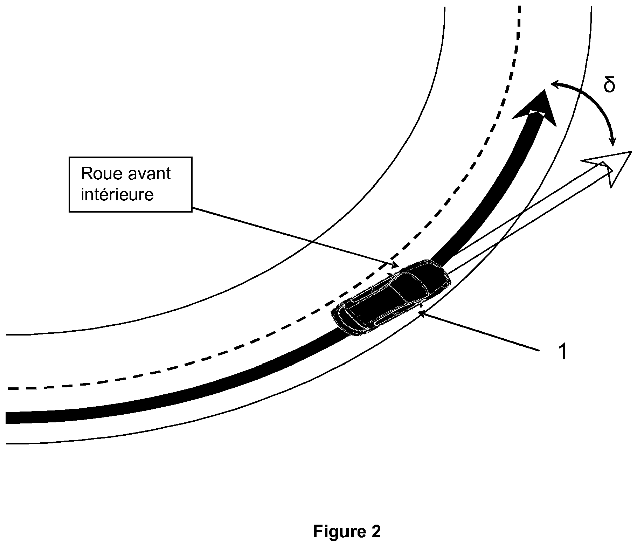

Une étape 104 de diagnostic de la trajectoire du véhicule 1, tient compte du résultat de l'étape 103. Dans le cas où $(\omega_{avd} - \omega_{avg}) - (\omega_{ard} - \omega_{arg}) < \varepsilon$, le procédé ne détecte pas d'écart de trajectoire et envoi la valeur 0 en sortie du comparateur ce qui entraine le retour du procédé à partir de l'étape 100. Dans le cas contraire, c'est-à-dire $(\omega_{avd} - \omega_{avg}) - (\omega_{ard} - \omega_{arg}) > \varepsilon$ ce qui correspond à un écart de trajectoire $\delta$, comme représenté à la figure 2, le procédé détecte un écart de trajectoire et envoi la valeur 1 en sortie du comparateur ce qui entraîne la poursuite du procédé par une étape 110.

L'étape 110 permet de déterminer laquelle des roues avant 2 ou 3 est la roue avant intérieure à la trajectoire, dans le but de commander l'étrier de frein qui lui est associé pour la correction de la trajectoire du véhicule. La roue avant 2 ou 3 intérieure est la roue avant intérieure à la trajectoire par rapport à la courbe du véhicule 1, en d'autre terme la roue avant intérieure est la roue avant parcourant le moins de distance dans la courbe. La roue avant 2 ou 3 intérieure est déterminée par la valeur algébrique de l'écart de vitesse des roues du train arrière Δar. Selon une variante, la roue avant 2 ou 3 intérieure peut être déterminée par la valeur de l'angle $\alpha$ du volant de direction 13.

Dans l'exemple illustré sur la figure 2, la roue avant intérieure est la roue avant gauche 2 illustré sur la figure 1, pour la suite de la description le cas de présenté à la figure 2 sera étudier.

Une étape 111 permet de calculer une vitesse de consigne $\Omega_{avg}$, pour la roue avant intérieure afin de réduire l'écart de trajectoire du véhicule 1. La correction à pour objectif d'avoir la même différence des vitesses des roues du train avant Δav et des roues du train arrière Δar. En partant de cette égalité on peut en déduire la vitesse de consigne par la roue avant intérieure 2 ou 3. Dans le cas présenté à la figure 2 la vitesse à de la roue avant intérieure 2 est obtenue par l'équation (4) :

$$\Delta av = \Delta ar \, ,$$

voir équation (1) et (2).

$$\omega_{avd} - \Omega_{avg} = \omega_{ard} - \omega_{arg}$$

$$\Omega_{avg} = \omega_{avd} - (\omega_{ard} - \omega_{arg}) \, (4)$$

Une étape 112 permet de comparer la vitesse de consigne $\Omega_{avg}$ avec la vitesse instantanée de la roue avant $\omega_{avg}$ intérieure. Le moyen de comparaison peut être, comme dans le mode de réalisation présenté à la figure 2, la différence entre la vitesse de consigne $\Omega_{avg}$ et la vitesse instantanée de la roue $\omega_{avg}$ mais il aurait pu être le rapport de ces vitesses.

Selon le mode de réalisation présenté, le procédé comprend une étape 113 de calcul d'une valeur de correction de vitesse $T_C$ qui doit être appliquée afin que la vitesse de la roue avant gauche $\omega_{avg}$ atteigne la vitesse de consigne $\Omega_{avg}$. La correction de vitesse $T_C$ qui doit être apportée peut être calculée, par exemple, par un calcul proportionnel intégral.

Une étape 114 permet de calculer une valeur de la consigne $F_C$ à appliquer par le système 10 sur l'étrier du frein de la roue avant gauche 2, en fonction de la correction de vitesse $T_C$, selon l'équation (5) suivante :

$$F_C = f(T_C) \qquad (5)$$

Une étape 115 permet une application conditionnelle de la consigne en fonction de certaines valeurs telles que l'angle $\alpha$ du volant de direction 13 et le couple moteur *M*.

Une étape 116 permet de commander le système de freinage 10 pour la valeur de la consigne $F_C$ calculée à l'étape 114 pour l'étrier de frein de la roue avant gauche 2.

Selon l'exemple illustré sur la figure 2, la roue avant gauche se trouve freinée, ce qui entraîne la réduction de la vitesse de la roue permettant de contrer le sous virage.

Dans le cas où l'on aurait un écart de trajectoire dans une courbe à droite, la roue avant intérieure aurait été la roue avant droite 3. Le procédé, présenté à la figure 3, ne change pas mais il est à noter que l'équation (4) de l'étape 111 diffère en écriture. La vitesse de consigne pour la roue avant droit 3 est obtenue par l'équation (6) :

$$\Omega_{avd} = \omega_{avg} + (\omega_{ard} - \omega_{arg}) \qquad (6)$$

La consigne est appliquée par les systèmes qui permettent de piloter les vitesses des roues avant. Ces systèmes sont, de façon non exhaustive, les différentiels pilotés, les freins et les moteurs indépendants. La consigne revient à diminuer la vitesse de la roue avant intérieure soit par action des freins, soit en réduisant le couple transmis sur cette roue dans le cas des moteurs indépendants et des différentiels pilotés.

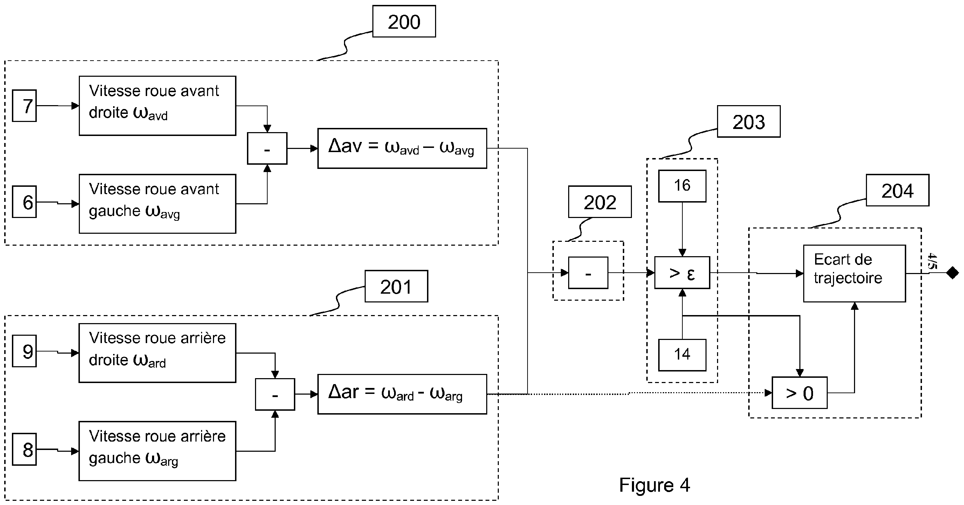

Comme présenté à la figure 4, le calculateur du système comporte un premier moyen 200 de calcul de la différence des vitesses des roues du train avant $\Delta av$ à partir du signal envoyé par les capteurs de vitesse 6 et 7. Un deuxième moyen 201 de calcul de la différence des vitesses des roues du train arrière $\Delta ar$ à partir du signal envoyé par les capteurs de vitesse 8 et 9.

Un troisième moyen 202 de calcul de la différence entre les écarts de vitesses de chacun des trains $\Delta av$ et $\Delta ar$ donné par l'équation (1) et (2), ce troisième moyen 202 de calcul est suivi par un moyen de comparaison 203 de cette différence avec une valeur seuil mémorisée $\varepsilon$. La valeur seuil $\varepsilon$ est, selon le mode de réalisation présenté, déterminée selon l'angle du volant $\alpha$ envoyé par le capteur d'angle volant 14 et selon le couple moteur M envoyé par le capteur de couple 16.

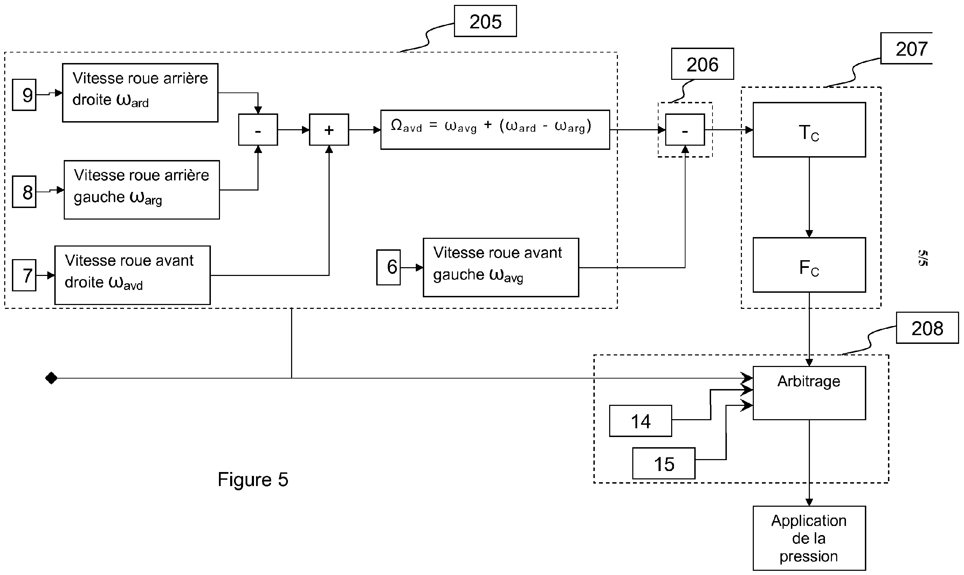

Un quatrième moyen 204 de calcul permet de déterminer s'il y a un écart de trajectoire selon le résultat du troisième moyen 203 de comparaison. Le quatrième moyen 204 permet en cas d'écart de trajectoire de déterminer quelle roue avant est la roue avant intérieure à la courbe défini par le véhicule 1. Le quatrième moyen 204 détermine la roue avant intérieure à partir de l'angle volant $\alpha$ ou à partir de la différence des vitesses des roues du train arrière $\Delta ar$ en pointillé sur la figure. Si le quatrième moyen 204 détermine un écart de trajectoire du véhicule 1 alors le quatrième moyen 204 déclenche un cinquième moyen 205 de calcul d'une vitesse de consigne de la roue avant intérieur représenté sur la figure 5.

Dans l'exemple présenté à la figure 2, la roue avant intérieure est la roue avant gauche. Le cinquième moyen 205 de calcul de la vitesse de consigne prend en compte la différence de vitesses des roues arrières $\Delta ar$ et prend en compte la vitesse de la roue avant droite $\omega_{avd}$ afin de calculer la vitesse de consigne de la roue avant gauche $\Omega_{avg}$, voir équation (6).

Un sixième moyen 206 de comparaison de la vitesse de consigne de la roue avant gauche $\Omega_{avg}$ avec la vitesse instantanée de la roue avant gauche $\omega_{avg}$, cette comparaison peut, selon l'exemple illustré, être la différence entre ces deux vitesses.

Puis, un septième moyen 207 permet à partir de la différence entre la vitesse de consigne $\Omega_{avg}$ à atteindre et la vitesse instantanée $\omega_{avg}$ de cette même roue de calculer, par un calcul proportionnel intégral par exemple, une consigne de correction de la vitesse $T_C$ de la roue avant intérieure à appliquer. Cette consigne de vitesse $T_C$ à pour objectif de diminuer l'écart entre la vitesse de consigne $\Omega_{avg}$ et la vitesse instantanée $\omega_{avg}$ par l'intermédiaire d'une pression appliquer par l'étrier de frein de la roue avant gauche, selon le mode réalisation présenté. Le septième moyen 207 permet à partir de la consigne de correction de vitesse $T_C$, de calculer une consigne de pression $F_C$ à appliquer par le dispositif de freinage 10 sur l'étrier de frein de la roue avant gauche, selon l'exemple présenté.

Selon le mode de réalisation présenté, le système de suivi de trajectoire comporte un huitième moyen 208 d'application de la consigne de pression si certains paramètres dépassent une valeur. Ces paramètres peuvent être, dans le cas présenté, l'angle volant $\alpha$ provenant du capteur d'angle 14, le couple M moteur provenant du capteur de couple 15 et l'écart de trajectoire du véhicule provenant du moyen 204. Le fait de prendre, notamment, comme paramètre la valeur de l'écart de trajectoire permet de limiter les corrections intempestives du système.

Selon le mode de réalisation présenté, la vitesse de consigne est atteinte grâce à un dispositif de freinage traditionnel qui actionne l'étrier de frein sur la roue avant intérieure.

Selon un autre mode de réalisation la vitesse des roues peut être commandée, non pas avec un dispositif de freinage traditionnel, mais par exemple avec un différentiel piloté qui réparti le couple moteur sur les roues motrices, des moteurs individuels fournissant l'énergie mécanique nécessaire à chacune des roues motrices ou tout autre moyen permettant de commander la vitesse des roues.

Des systèmes peuvent sembler assurer les mêmes prestations que la solution proposée par l'invention. On peut citer, les différentiels mécanique, les simulations de différentiels mécaniques par les freins, les contrôle de sous virage des contrôle de trajectoire (ESC).La solution de la présente invention se différencie de ces systèmes de contrôle de sous virage des ESC, par le fait que le procédé de l'invention agit de façon préventive. L'invention décrite intervient avant d'atteindre cette phase de sous-virage et va donc limiter les interventions des systèmes de contrôle de trajectoire ESC. L'invention a pour avantage majeur de permettre la détection rapide de l'écart de trajectoire.

Un autre avantage de l'invention décrite, et que l'on agit de façon progressive et non perturbatrice pour le conducteur, alors que les contrôle de trajectoire vont couper le moteur et freiner fortement le véhicule de façon à le ralentir et diminuer le sous virage. Cet avantage découle de l'application de la consigne de vitesse sur la roue avant intérieure selon la vitesse des roues arrières.

**Revendications**

1. Système de suivi de la trajectoire d'un véhicule automobile (1) comportant un capteur de vitesse instantanée sur chacune des roues (6, 9) des trains avant et arrière, des moyens (200 et 201) de calcul de l'écart de vitesse entre roues d'un même train ($\Delta$av et $\Delta$ar), des moyens (202) de calcul de la différence entre les écarts de vitesses de chacun des trains, et des moyens (203) de comparaison de cette différence avec une valeur seuil mémorisée ($\varepsilon$), **caractérisé en ce qu'**il comporte des moyens (204) de détermination d'un écart de trajectoire du véhicule en fonction de l'écart de vitesse des roues du train arrière ($\Delta$ar) ou en fonction du signe de la mesure de l'angle du volant de direction (14) du véhicule par des moyens de mesure dudit angle, des moyens de mesure du couple moteur (15), des moyens (207) de détermination d'une consigne de correction de vitesse de roue ($T_C$) et des moyens (208) d'application de la consigne de correction de vitesse de roue ($T_C$), lesdits moyens (208) étant capable d'appliquer la consigne de vitesse de roue ($T_C$) lorsque la valeur mesurée de l'angle du volant de direction (14) du véhicule et du couple (15) dépassent une valeur.

2. Système selon la revendication 1, dans lequel il comprend une cartographie mémorisée de valeurs seuil en fonction de la vitesse (16) véhicule et de l'angle du volant de direction (14) du véhicule.

3. Système selon la revendication 1 ou 2, dans lequel les moyens (208) d'application de la consigne de correction de vitesse ($T_C$) sont capables d'appliquer la consigne de correction de vitesse ($T_C$) sur la roue avant intérieure de la trajectoire.

4. Procédé de suivi de la trajectoire d'un véhicule automobile, comprenant les étapes suivantes :

   - calcul des écarts de vitesse des roues de chacun des trains avant et arrière ($\Delta$av et $\Delta$ar),
   - calcul de la différence des écarts de vitesse entre chacun des trains avant et arrière ($\Delta$av et $\Delta$ar),
   - comparaison de la différence des écarts de vitesse avec une valeur seuil mémorisée ($\varepsilon$), **caractérisé en ce qu'**il comprend les étapes de :

      - détermination d'un écart de trajectoire du véhicule en fonction de l'écart de vitesse des roues du train arrière ($\Delta$ar) ou en fonction du signe de la mesure de l'angle du volant de direction ($\alpha$) du véhicule,
      - mesure du couple moteur (15),
      - détermination de la consigne de vitesse de roue ($T_C$) à appliquer en fonction d'une mesure de l'angle du volant de direction ($\alpha$) du véhicule et du couple moteur ($M$)
      - correction de vitesse de roue ($T_C$) lorsque la valeur mesurée de l'angle du volant de direction (14) du véhicule et du couple moteur (15) dépassent une valeur.

5. Procédé selon la revendication 4, comprenant une étape de détermination de la valeur seuil ($\varepsilon$) en fonction de la vitesse du véhicule ($v$) et de l'angle du volant de direction ($\alpha$) du véhicule.

6. Procédé selon l'une des revendications 4 ou 5, dans lequel il comporte une étape d'application de la consigne de correction sur la roue avant intérieure de la trajectoire.

**Patentansprüche**

1. System zum Verfolgen der Bahn eines Kraftfahrzeugs (1), umfassend einen Momentandrehzahlsensor an jedem der Räder (6, 9) an der Vorder- und Hinterachse, Mittel (200 und 201) zum Berechnen der Drehzahlabweichung zwischen den Rädern einer gleichen Achse ($\Delta$av und $\Delta$ar), Mittel (202) zum Berechnen der Differenz zwischen den Drehzahlabweichungen jeder der Achsen und Mittel (203) zum Vergleichen dieser Differenz mit einem gespeicherten Schwellenwert (ε), **dadurch gekennzeichnet, dass** es Mittel (204) zum Bestimmen einer Bahnabweichung des Fahrzeugs gemäß der Drehzahlabweichung der Räder der Hinterachse (Δar) oder gemäß dem Vorzeichen des Lenkradwinkelmesswerts (14) des Fahrzeugs durch Mittel zum Messen des Winkels, Mittel zum Messen des Drehmoments (15), Mittel (207) zum Bestimmen eines Raddrehzahlkorrektursollwerts ($T_C$) und Mittel (208) zum Anwenden des Raddrehzahlkorrektursollwerts ($T_C$) umfasst, wobei die Mittel (208) den Raddrehzahlsollwert ($T_C$) anwenden können, wenn der gemessene Wert des Lenkradwinkels (14) des Fahrzeugs und des Drehmoments (15) einen Wert übersteigt.

2. System nach Anspruch 1, wobei es ein gespeichertes Kennfeld von Schwellenwerten gemäß der Drehzahl (16) des Fahrzeugs und des Lenkradwinkels (14) des Fahrzeugs umfasst.

3. System nach Anspruch 1 oder 2, wobei die Mittel (208) zum Anwenden des Drehzzahlkorrektursollwerts ($T_C$) den Drehzahlkorrektursollwert ($T_C$) auf das bahninnere Vorderrad anwenden können.

4. Verfahren zum Verfolgen der Bahn eines Kraftfahrzeugs, das die folgenden Schritte umfasst:

- Berechnen der Drehzahlabweichungen der Räder sowohl der Vorder- als auch der Hinterachse (Δav und Δar),
- Berechnen der Differenz der Drehzahlabweichungen zwischen sowohl der Vorder- als auch der Hinterachse (Δav und Δar),
- Vergleichen der Differenz der Drehzahlabweichungen mit einem gespeicherten Schwellenwert (ε), **dadurch gekennzeichnet, dass** es die folgenden Schritte umfasst:
- Bestimmen einer Abweichung der Bahn des Fahrzeugs gemäß der Drehzahlabweichung der Räder der Hinterachse (Δar) oder gemäß dem Vorzeichen des Messwerts des Lenkradwinkels (α) des Fahrzeugs,

- Messen des Drehmoments (15),
- Bestimmen des anzuwendenden Raddrehzahlsollwerts ($T_C$) gemäß einem Messwert des Lenkradwinkels (α) des Fahrzeugs und dem Drehmoment (*M*),

- Korrigieren der Raddrehzahl ($T_C$), wenn der gemessene Wert des Lenkradwinkels (14) des Fahrzeugs und des Drehmoments (15) einen Wert übersteigt.

5. Verfahren nach Anspruch 4, umfassend einen Schritt des Bestimmens des Schwellenwerts (ε) gemäß der Geschwindigkeit des Fahrzeugs (*v*) und des Lenkradwinkels (α) des Fahrzeugs.

6. Verfahren nach Anspruch 4 oder 5, wobei es einen Schritt des Anwendens des Korrektursollwerts auf das bahninnere Vorderrad umfasst.

## Claims

1. System for monitoring the trajectory of a motor vehicle (1) comprising an instantaneous speed sensor on each of the wheels (6, 9) of the front and rear axle systems, means (200 and 201) for computing the speed discrepancy between wheels of one and the same axle system (Δav and Δar), means (202) for computing the difference between the speed discrepancies of each of the axle systems, and means (203) for comparing this difference with a stored threshold value (ε), **characterized in that** it comprises means (204) for determining a trajectory discrepancy of the vehicle as a function of the speed discrepancy of the wheels of the rear axle system (Δar) or as a function of the sign of the measurement of the angle of the steering wheel (14) of the vehicle by means for measuring said angle, means for measuring the engine torque (15), means (207) for determining wheel a speed correction setpoint ($T_c$) and means (208) for applying the wheel speed correction setpoint ($T_c$), said means (208) being capable of applying the wheel speed setpoint ($T_c$) when the measured value of the angle of the steering wheel (14) of the vehicle and of the torque (15) exceed a value.

2. System according to Claim 1, said system comprising a stored mapping of threshold values as a function of the vehicle speed (16) and of the angle of the steering wheel (14) of the vehicle.

3. System according to Claim 1 or 2, wherein the means (208) for applying the speed correction setpoint ($T_c$) are capable of applying the speed correction setpoint ($T_c$) to the inside front wheel of the trajectory.

4. Method for monitoring the trajectory of a motor vehicle, comprising the following steps:

- computing the speed discrepancies of the wheels of each of the front and rear axle systems (Δav and Δar),
- computing the difference in the speed discrepancies between each of the front and rear axle systems (Δav and Δar),
- comparing the difference in the speed discrepancies with a stored threshold value (ε), **characterized in that** it comprises the steps of:
- determining a trajectory discrepancy of the vehicle as a function of the speed discrepancy of the wheels of the rear axle system (Δar) or as a function of the sign of the measurement of the angle of the steering wheel (α) of the vehicle,
- measuring the engine torque (15),
- determining the wheel speed setpoint ($T_c$) to be applied as a function of a measurement of the angle of the steering wheel (α) of the vehicle and of the engine torque (M),
- correcting the wheel speed ($T_c$) when the measured value of the angle of the steering wheel (14) of the vehicle and of the engine torque (15) exceed a value.

5. Method according to Claim 4, comprising a step of determining the threshold value (ε) as a function of the speed of the vehicle (v) and of the angle of the steering wheel (α) of the vehicle.

6. Method according to either of Claims 4 and 5, said method comprising a step of applying the correction setpoint to the inside front wheel of the trajectory.

**Figure 1**

Roue avant intérieure

δ

1

**Figure 2**

$\omega_{avg}$, $\omega_{avd}$, $\omega_{arg}$, $\omega_{ard}$ — 100

$\Delta av$, $\Delta ar$ — 101

$\Delta av$ - $\Delta ar$ — 102

$\alpha$

$v$

$\varepsilon$

$\Delta av - \Delta ar > \varepsilon$ — 103

0

104

1

Détermination de la roue intérieure — 110

$\Omega_{avg}$ — 111

$\omega_{avg}$ - $\Omega_{avg}$ — 112

$T_C$ — 113

$F_C = f\,(T_C)$ — 114

$\alpha$

$M$

Application conditionnelle — 115

Action freinage — 116

**Figure 3**

Figure 4

205

| 9 | Vitesse roue arrière droite $\omega_{ard}$ |

| 8 | Vitesse roue arrière gauche $\omega_{arg}$ |

| 7 | Vitesse roue avant droite $\omega_{avd}$ |

$\Omega_{avd} = \omega_{avg} + (\omega_{ard} - \omega_{arg})$

206

| 6 | Vitesse roue avant gauche $\omega_{avg}$ |

207

$T_C$

$F_C$

208

Arbitrage

| 14 |

| 15 |

Application de la pression

Figure 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2893294
- FR 2845656
- DE 4111614